# EUROPEAN PATENT APPLICATION

(11) **EP 4 506 873 A1**
(43) Date of publication of application: **12.02.2025**
(21) Application number: 23784513.6
(22) Date of filing: 01.02.2023
(51) Int. Cl.: G06Q 10/20, B61L 23/04, G05B 23/02, G06Q 50/30

(54) **RAILROAD MAINTENANCE ASSISTANCE SYSTEM AND RAILROAD MAINTENANCE ASSISTANCE METHOD**

(30) Priority: 07.04.2022 JP 2022064180
(71) Applicant: Hitachi, Ltd., Tokyo 100-8280 (JP)
(72) Inventor: YANO, Kojin, Tokyo 100-8280 (JP); OHHIRA, Norifumi, Tokyo 100-8280 (JP); HIRANO, Kiichi, Tokyo 100-8280 (JP)
(74) Representative: MERH-IP Matias Erny Reichl Hoffmann Patentanwälte PartG mbB
(86) International application number: PCT/JP2023/003171
(87) International publication number: WO 2023/195218

(57) **Abstract**

The railroad maintenance support system includes a processor (113), and a memory unit. The processor (113) estimates deterioration prediction model (110), for each of multiple railroad facilities, used to predict the deterioration of railroad facility with maintenance accuracy as an explanatory variable, which is information about the accuracy of maintenance of railroad facility converted from sensing data obtained from sensor apparatus (117, 119, 121) of railroad facility, and stores in the memory unit. In the estimation of the deterioration prediction model (110), the processor (113) performs the process of estimating a deterioration prediction model (110) of second railroad facility, which includes an explanatory variable is a deterioration prediction of deterioration prediction model (110) of first railroad facility already estimated and stored in the memory unit. The processor (113) outputs overall maintenance cost by maintenance based on deterioration prediction of deterioration prediction model (110) for each railroad facility.

## Description

### BACKGROUND OF THE INVENTION

### 1. Field of the Invention

This invention relates to a railroad maintenance support system and a railroad maintenance support method.

### 2. Description of the Related Art

Social infrastructures such as electric power and railroads have been highly developed year by year to enable people to lead more affluent lives. For example, regarding railroads, when it was first introduced, it is consisted of locomotives that takes charge of power, and carriages, but gradually, small power units were used in carriages so that power could also be secured by carriages, and lighting; air conditioning, and other equipment were installed to improve passenger comfort. The tracks are also increasingly consisted with a large number of apparatuses, such as traffic signals to ensure train safety is equipped, and Automatic Train Control (ATC) to limit train speed is installed. On the other hand, as the number of apparatuses increases, maintenance of those apparatuses is inevitably required, which increases maintenance costs. Infrastructure operators, in order to reduce maintenance costs, are beginning to shift from the traditional manual inspection and repair of infrastructure to the introduction of remote systems utilizing the Internet of Things (IoT), and from Time Based Maintenance (TBM) to Condition Based Maintenance (CBM) utilizing sensor information. As a means of realizing that CBM, the following invention is cited.

### CITATION LIST

### PATENT DOCUMENT

Patent Document 1: JP-A-2017-16509

Patent Document 1 provides a means of collecting sensor information on equipment, performing deterioration status and future deterioration estimation prediction, clarifying the relationship between the predicted deterioration status and the occurrence of abnormal events in the equipment, and estimating the future incurred costs. It is thinking that the means represented in patent document 1 are particularly effective for equipment and device that operate independently.

However, especially in railroads, it is the System of Systems that can operates normally only when multiple apparatuses and equipment are involved, and an abnormality in one apparatus may affect other apparatus and equipment. For example, in the case of track maintenance, maintenance standards are set for track displacement (gauge, alignment, longitudinal level, cross level and twist), but it is expected that the probability of failure occurrence will increase when a train runs on a track with large track displacement. However, despite the fact that railroads are systems of systems, so far, maintenance has been not considered the relationship between equipment and apparatus, and it is performed management by setting maintenance standards for each equipment and apparatus. For example, for railroad tracks, there are above maintenance standards for the tracks, and for vehicle, there are maintenance standards for vehicle, and for overhead lines, in the same way, maintenance standards for overhead lines are set and managed. In case of such a management method, because maintenance management is performed without considering the condition of the other side equipment and apparatus, it is expected that excessive maintenance occurs not uncommonly. In recent years, especially in the Japanese railroad industry, the number of rail passengers has been decreasing due to the declining population, and railroad companies are required to reduce maintenance costs in order to enhance their sustainability of company, but it is expected that the conventional maintenance method based on maintenance standards for each equipment and apparatus will reach its limits.

The purpose of this invention, for railroads that an example of a System of Systems, is to derive a lower-cost maintenance method while considering the relationship of maintenance of each equipment and apparatus, rather than the conventional maintenance method for each equipment and apparatus.

### SUMMARY OF THE INVENTION

According to a first aspect of the invention, the following railroad maintenance support system is provided. Therefore, the railroad maintenance support system includes a processor, and a memory unit. The processor estimates deterioration prediction model, for each of multiple railroad facilities, used to predict the deterioration of railroad facility with maintenance accuracy as an explanatory variable, which is information about the accuracy of maintenance of railroad facility converted from sensing data obtained from sensor apparatus of railroad facility, and stores in the memory unit. In the estimation of the deterioration prediction model, the processor performs the process of estimating a deterioration prediction model of second railroad facility, which includes an explanatory variable is a deterioration prediction of deterioration prediction model of first railroad facility already estimated and stored in the memory unit. The processor outputs overall maintenance cost by maintenance based on deterioration prediction of deterioration prediction model for each railroad facility.

According to a second aspect of the invention, the following railroad maintenance support system is provided. Therefore, the railroad maintenance support system includes a processor, and a memory unit. The processor estimates failure prediction model, for each of multiple railroad facilities, used to predict the failure of railroad facility, and stores in the memory unit. In the estimation of the failure prediction model, the processor performs the process of estimating a failure prediction model of second railroad facility, which includes an explanatory variable is a failure prediction of failure prediction model of first railroad facility already estimated and stored in the memory unit. The processor outputs overall maintenance cost by maintenance based on failure prediction of failure prediction model for each railroad facility.

According to a third aspect of the invention, the following railroad maintenance support method is provided. Therefore, the railroad maintenance support method is method that is performed using a railroad maintenance support system including a processor, and a memory unit. The processor inputs maintenance accuracy which is information about the accuracy of maintenance of railroad facility, estimates deterioration prediction model, for each of multiple railroad facilities, used to predict the deterioration of railroad facility with the maintenance accuracy as an explanatory variable, and stores in the memory unit. The processor outputs overall maintenance cost by maintenance based on deterioration prediction of deterioration prediction model for each railroad facility. When estimating deterioration prediction model for each of the multiple railroad facilities, the processor performs the process of estimating a deterioration prediction model of second railroad facility, which includes an explanatory variable is a deterioration prediction of deterioration prediction model of first railroad facility already estimated and stored in the memory unit.

### Advantageous Effect

According to the invention, it is possible to derive a lower-cost maintenance method, for railroads an example of a System of Systems, while taking into account the relationship between the maintenance of the respective equipment and apparatus. Note that, configurations, and effects other than those described above will be clarified in the following description of the embodiments for implementing the invention.

### BRIEF DESCRIPTION OF THE DRAWINGS

FIG. 1 is a configuration diagram shows an example of a railroad maintenance decision support system in accordance with the first embodiment.
FIG. 2 is a flowchart showing an example of the deterioration prediction model estimation, and the process of determining the maintenance accuracy when maintenance cost is minimized.
FIG. 3A is a diagram illustrating an example of input data, regarding a method for determining maintenance accuracy at each point in time.
FIG. 3B is a diagram illustrating an example of output data, regarding a method for determining maintenance accuracy at each point in time.
FIG. 4 is a diagram illustrating an example of a data structure registering measurements of railroad facility.
FIG. 5 is a diagram illustrating an example of environmental information.
FIG. 6 illustrates formula 1.
FIG. 7 is a diagram illustrating an example of transportation information.
FIG. 8 illustrates formula 2.
FIG. 9 illustrates formula 3-.
FIG. 10 illustrates formula 4.
FIG. 11 is a flowchart showing an example of a maintenance cost calculation method.
FIG. 12 is a diagram illustrating an example of a data structure representing maintenance costs.
FIG. 13 is a diagram illustrating an example of the output when the total maintenance cost is lowest.
FIG. 14 is a configuration diagram shows an example of a railroad maintenance decision support system in accordance with the second embodiment.
FIG. 15 is a flowchart showing an example of the process of estimating the failure prediction model, and determining the maintenance accuracy when maintenance cost is minimized.
FIG. 16 is a diagram illustrating specific examples of failure information used in determining each coefficient.
FIG. 17 illustrates formula 5.
FIG. 18 illustrates formula 6.
FIG. 19 illustrates formula 7.
FIG. 20 is a diagram illustrating an example of the data structure of the aggregate result in accordance with the third embodiment.
FIG. 21 is a diagram illustrating an example of comparative display of maintenance cost.
FIG. 22 is a configuration diagram shows an example of a railroad maintenance decision support system in accordance with the fourth embodiment.
FIG. 23 is a flowchart showing an example of the process of estimating model in case of maintenance handling both of deterioration and failure, and determining the maintenance accuracy of each facility when maintenance cost is minimized.
FIG. 24 illustrates formula 8.
FIG. 25 illustrates formula 9.
FIG. 26 is a diagram that shows an example configuration consisting of multiple facilities and equipment.
FIG. 27 is a flowchart showing an example of model estimation for each of the configured railroad facilities based on the example configuration.
FIG. 28 is an activity diagram showing an example of maintenance performing up to at a railroad maintenance site.

### MODE FOR CARRYING OUT THE INVENTION

Hereinafter, an embodiment of the invention will be explained based on drawings. Parts with the same symbols represent the same object, and the basic configuration, and operation shall be the same. The embodiments are examples to illustrate the invention, and have been omitted and simplified as appropriate for the sake of clarity of explanation. The invention can also be implemented in various other forms.

Examples of various types of information may be explained in expression of "tables," "lists," "queues," etc., but various types of information may be expressed in data structures other than these. For example, various types of information such as "XX table," "XX list," "XX queue," etc. may be represented as "XX information. When explaining identification information, expressions such as "identification information," "identifier," "name," "ID," and "number" are used but these can be substituted for each other.

In the embodiment, equipment and apparatus with maintenance relationships, such as rails and wheels, air brakes and electric brakes, etc., are targeted, and it is explained a support system that presents more appropriate maintenance methods, based on the maintenance relationships among multiple equipment and apparatuses.

### <Embodiment 1>

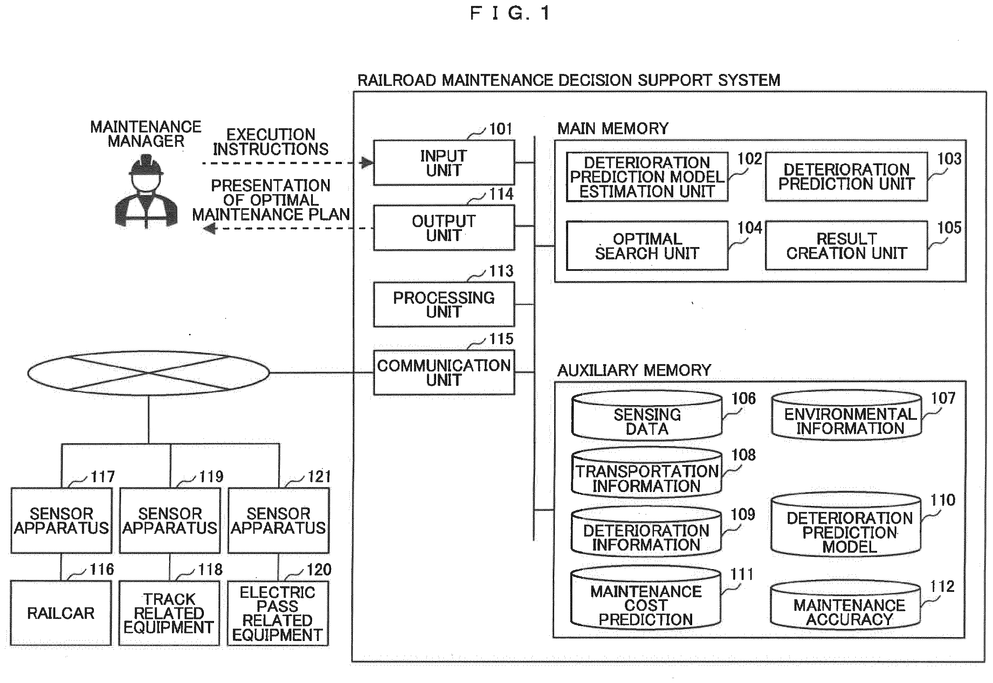

The first embodiment relates to a railroad maintenance decision support system that presents maintenance accuracy of each facility and apparatus that can best reduce maintenance costs as a whole, by estimating a model that enables prediction of deterioration based on sensor information sent from railroad facility and apparatus, and further estimating maintenance relationships among facility, etc. Figure 1 is a configuration diagram shows an example of a railroad maintenance decision support system.

The railroad maintenance decision support system (railroad maintenance support system) is consisted by a computer apparatus comprising information processing resources such as an input interface, a memory device (main memory and auxiliary memory), a processor (e.g., CPU), a display device (e.g., liquid crystal display), a communication unit, and a bus interconnecting these devices.

The input interface constitutes the input unit 101. When the maintenance manager gives instructions to execute the process, estimation of the deterioration prediction model and calculation of the search for the maintenance accuracy that will result in the lowest overall cost are performed. A main memory (e.g., memory) and an auxiliary memory (e.g., HDD) are used as the memory device (memory unit), and in the main memory, the programs (deterioration prediction model estimation unit 102, deterioration prediction unit 103, optimal search unit 104, and result creation unit 105) that realize each function are stored. In addition, the auxiliary memory stores various information to be used (sensing data 106, environmental information 107, transportation information 108, and deterioration information 109), and, deterioration prediction model 110, maintenance cost prediction 111, and maintenance accuracy 112, which are the processing results of the above programs. Note that, the main memory may also store programs for determining maintenance accuracy and calculating maintenance costs. The auxiliary memory stores programs to be executed by the processor.

The processor is stored in processing unit 113 and can perform various functions by functioning as an arithmetic executor that executes the processing of the above program. The display device corresponds to the output unit 114 and it is possible to check the item setting status and the processing results.

The communication unit 115 comprises an interface used for communication. The processing unit 113, via the communication unit 115, acquires sensor information sent from each railroad facility and apparatus of managing target, which are external to the railroad maintenance decision support system, and stores the information in the auxiliary memory. The bus link the above processor, input interface, memory device, display device, and interface, and contribute to the realization of functions by passing / receiving information.

The above sensor information is sent to the communication unit 115 via the network. For example, the results of sensing by the sensor apparatus 117 mounted on the railcar 116 are sent to the communication unit 115 via the network. Similarly, also in the track related equipment 118, the sensing data by the sensor apparatus 119 to observe is sent to the communication unit 115. In addition, also regarding electric pass related equipment 120, sensing data is sent to the communication unit 115, sensed by the sensor apparatus 121. Note that, the number of facility and apparatus to be managed is arbitrary and is not limited to the number shown in this figure. It is sufficient that there are at least two or more minimum related facility or apparatus.

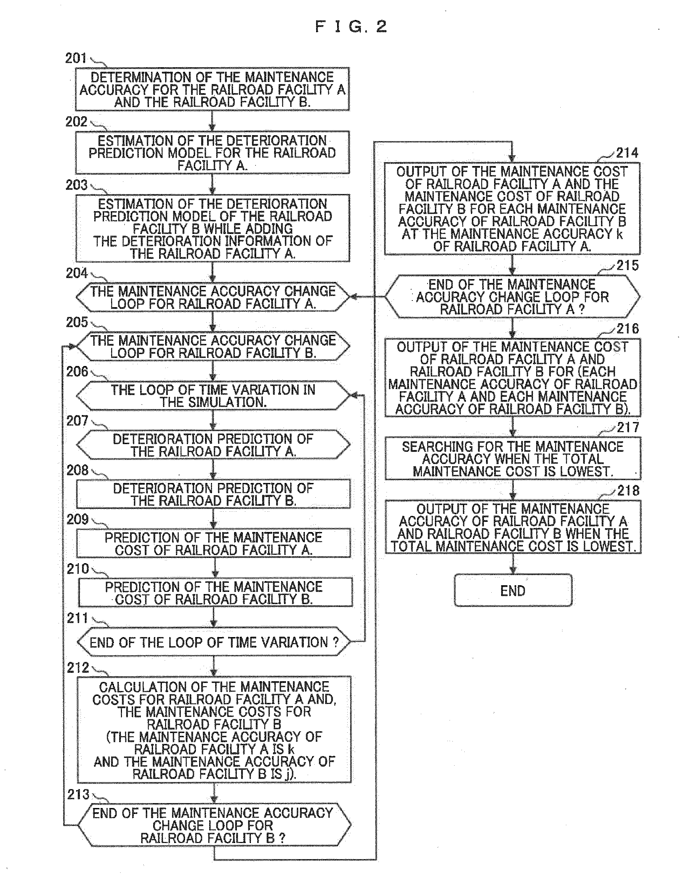

Next, with reference to figure 2, an example of the deterioration prediction model estimation in the railroad maintenance decision support system, the estimation of total maintenance cost, and the process of determining the maintenance accuracy of each facility that maintenance cost to be minimize, will be explained. Figure 2 is a flowchart showing an example of the deterioration prediction model estimation and the process of determining the maintenance accuracy. In this explanation, it is assumed that there are two maintenance management targets, railroad facility A and railroad facility B, and that the deterioration of railroad facility B is affected by the maintenance accuracy of railroad facility A. In other words, railroad facility A and railroad facility B are assumed to have a maintenance relationship. Note that, in the present invention, the number of target facilities need only be two or more, but additional processing for the case of three or more is explained later.

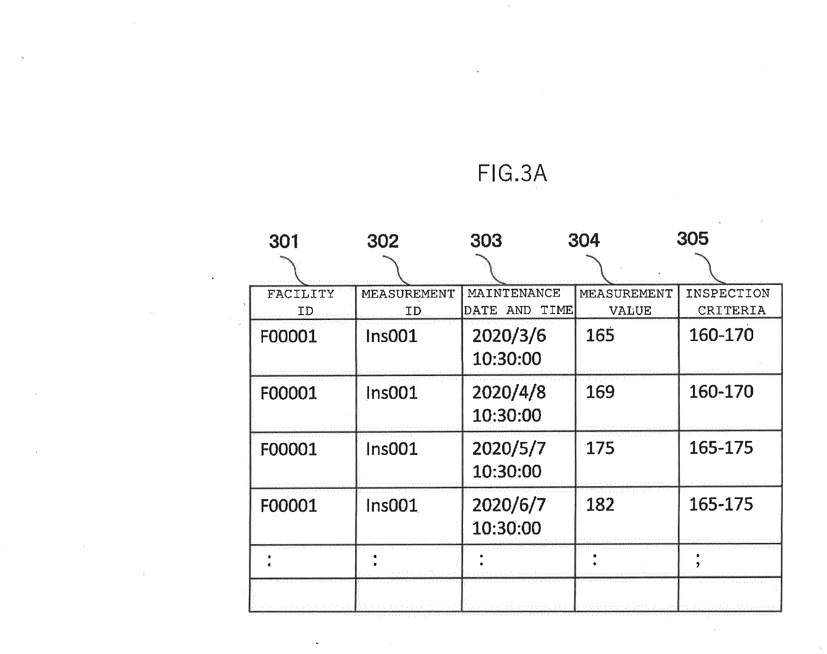

First, the processing unit 113 determines the maintenance accuracy for the target facility A (railroad facility A) and the target facility B (railroad facility B) (201). In determining the maintenance accuracy, the processing unit 113 executes a program to calculate the maintenance accuracy. In this determination method, there are determination method for each period and determination method for each point in time, but both can be processed in the same way. Here, a specific example of the determination method for each point in time is shown and explained. Here, figure 3A relates to the method of determining maintenance accuracy at each time point, and shows an example of input data.

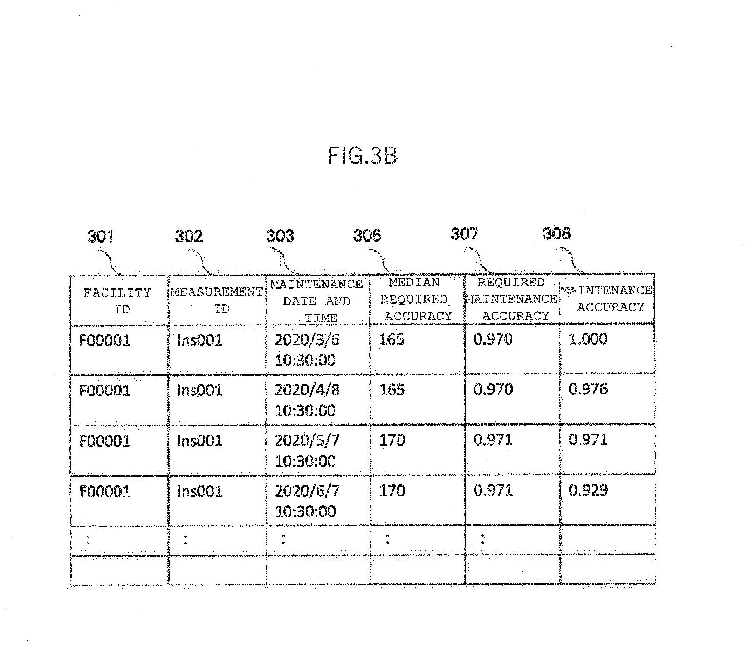

In figure 3A, the facility ID 301 is an ID indicating which facility it is for, and the measurement ID 302 indicates the measurement item for that facility. Maintenance date and time 303 indicates the maintenance date and time, and the date and time of inspection or repair. The measurement value 304 indicates the value measured for the measurement ID 301. Inspection criteria 305 indicates the inspection criteria for the measurement, 160-170 in the first line of this figure means that if the measurement value is between 160 and 170, the inspection criteria are met. -Next, figure 3B shows an example of the results of the process in the figure showing the method of determining maintenance accuracy. Note that, the same numbers are given to the same items as in fig. 3A, so the explanation is omitted. The median required accuracy 306 indicates the median value of the required accuracy, for example, if the inspection criteria 305 is 160-170, the median required accuracy is determined to be (160 + 170)/2 = 165. The required maintenance accuracy 307 indicates the deviation from the inspection criterion 305 based on 1 (if the value is same as the required maintenance accuracy, it is become 1) . There are several possible calculation methods, for example, it can be calculated as, required maintenance accuracy = (median required accuracy - (upper limit of inspection criterion - lower limit of inspection criterion) / 2) / median required accuracy. The maintenance accuracy 308 indicates the actual maintenance accuracy. The calculation method is, for example, maintenance accuracy = 1- (median required accuracy - measured value) / median required accuracy. Thus, if the required maintenance accuracy is, for example, 0.95, it means that the maintenance accuracy calculated from the measurement results by the measurement ID is considered normal from 1 to 0.95. Using this maintenance accuracy, the processes from 202 onward in fig. 2 are performed.

Return to the explanation in figure 2. Next, the processing unit 113 estimates the deterioration prediction model for the railroad facility A (202). This process corresponds to the deterioration prediction model estimation unit 102 in figure 1. For example, a regression estimation method with a linear model or an estimation method using machine learning can be used as an estimation method for the deterioration prediction model. In this explanation, regression estimation with a linear model will be used as an example, but it is not limitation that regarding estimation methods for deterioration prediction models.

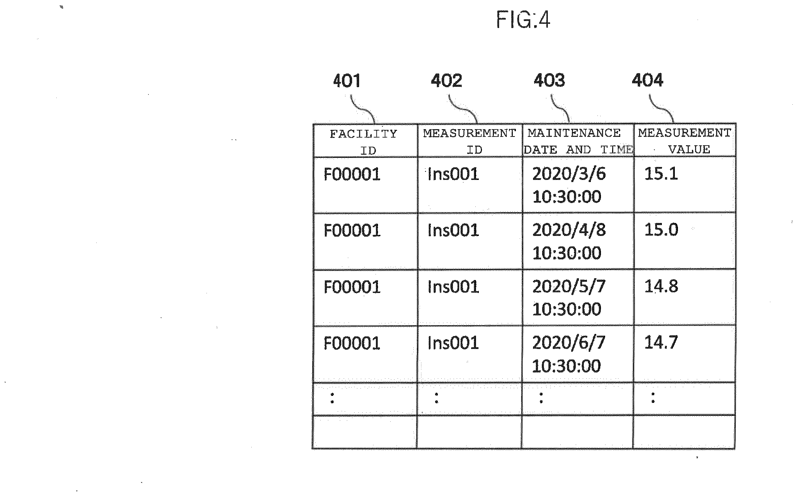

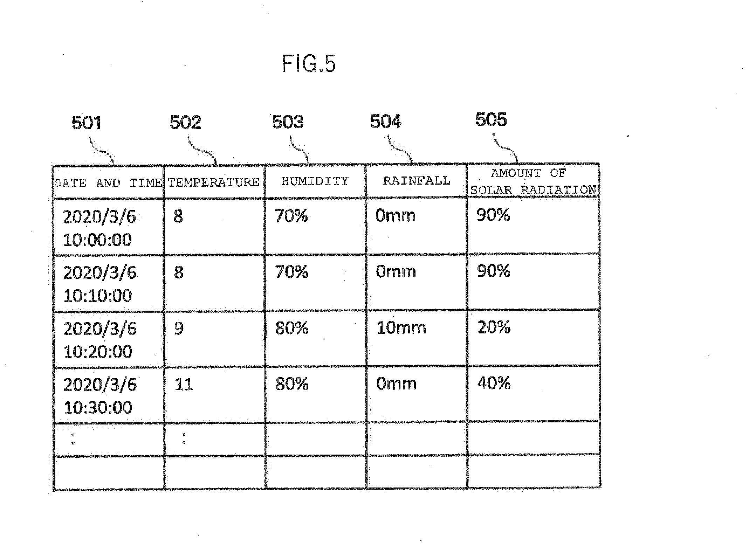

During regression estimation of the linear model, it is necessary to set the candidate explanatory variables (x1, x2, ..., xn) and the objective variable y. The objective variable y is the measured value indicating the deterioration to-be predicted. The candidate explanatory variables can be other measured values of the railroad facility A, or environmental information (temperature, humidity, weather, rainfall, amount of solar radiation, time of day, etc.) in the vicinity where the facility exists, but one of the features of this invention is that the maintenance accuracy of the facility A is included among the explanatory variables. Here, by using fig.4, it is explained an example of data structure registered measurement value of railroad facility.Also, by using fig.5, it is explained an example of environmental information.

In figure 4, facility ID 401 indicates the ID of the facility, and measurement ID 402 indicates the ID of the measurement item for that facility. Measurement date and time 403 is the measurement date and time, and measurement value 404 indicates the measurement value.

Figure 5 shows an example of environmental information. The date and time 501 shows date and time, and the temperature 502 shows temperature at that date and time. Similarly, humidity 503 indicates humidity, rainfall 504 indicates rainfall, and amount of solar radiation 505 indicates amount of solar radiation. Of course, if it is traveling over a long section in railroad, this environmental information may be prepared for each section where environmental conditions can change. In addition to this, in embodiment, the regression estimation is performed with adding the maintenance accuracy shown in figure 3B.

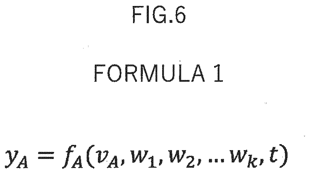

Multiple regression estimation is performed based on the combination of these candidate explanatory variables and the objective variable. During multiple regression estimation, unnecessary explanatory variables are deleted, but the process is performed in such a way that explanatory variables with maintenance accuracy are not deleted when the variables are deleted. Thereby, a deterioration prediction model is estimated as a result of regression estimation. The estimated regression equation is formula 1 shown in figure 6.

Here, y_{A} is the deterioration prediction of facility A, v_{A} is the maintenance accuracy of facility A, w₁, w₂, ..., wₖ are the remaining explanatory variables (k ≤ n) from the candidate explanatory variables, and t is the elapsed time, which is the deterioration prediction model of railroad facility A. Note that, in this explanatory variable w₁, w₂, ..., wₖ may be explanatory variables that take transportation information into account.

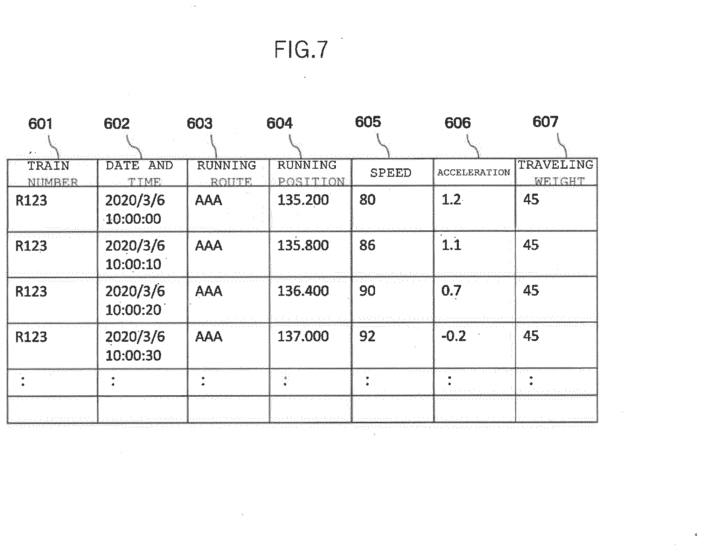

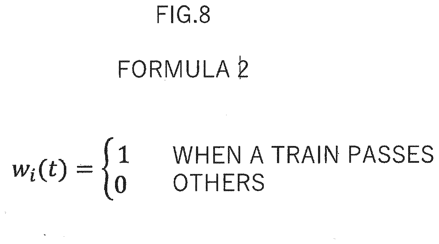

With reference to figure 7, transportation information will be explained. Figure 7 shows an example of transportation information. Train number 601 indicates the train number, which is an ID that identifies which train. Date and time 602 indicates the date and time. Running route 603 shows the running route and indicates which route the train is running on. Running position 604 indicates the running position, for example, the accumulated distance from the starting station. Speed 605 indicates the speed, and acceleration 606 indicates the acceleration. The traveling weight 607 indicates the traveling weight. When transportation information is taken into account, for example, if the effect of deterioration on railroad facility A works only when a train passes, a certain explanatory variable wᵢ may be treated as taking the value shown in formula 2 of figure 8.

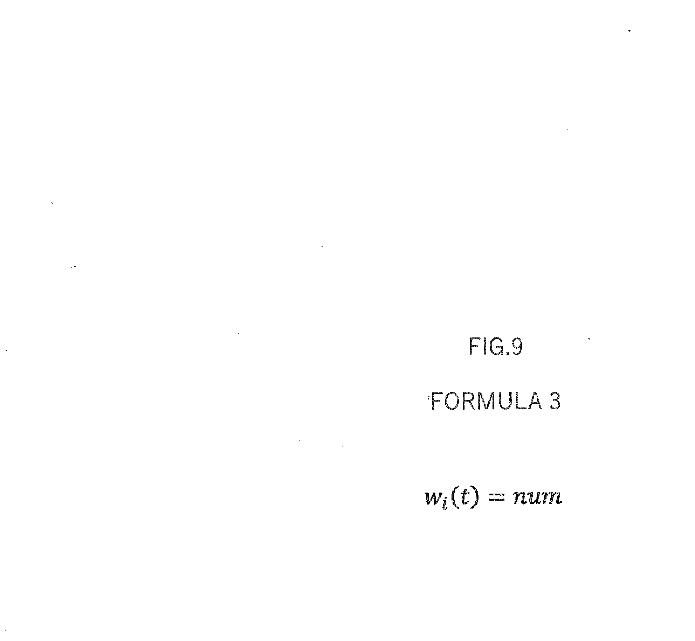

Here, in the case of the data structure shown in figure 7, as an example, the value is 1 if data exists for the train number, date and time, running route, and running position, and is 0 if not. Or, if it is due to the number of times a train has passed, it may be used as in formula 3 in figure 9.

Here, num is the number of passes up to the elapsed time t. Similarly, when using the data structure shown.in figure 7, as an example, regarding the relevant train number, date and time, running route, and running position, the number of existing data is the number of passes. Alternatively, it is considered the value of the data in the transportation information can be used. For example, wi(t) may be the value of traveling weight for the relevant train number, date and time, running route, and running position. This allows the effect of traveling weight to be taken into account in the deterioration. Note that, the explanatory variables in formula 4, formula 6, formula 7, etc., explained below may also be explanatory variables that take into account transportation information.

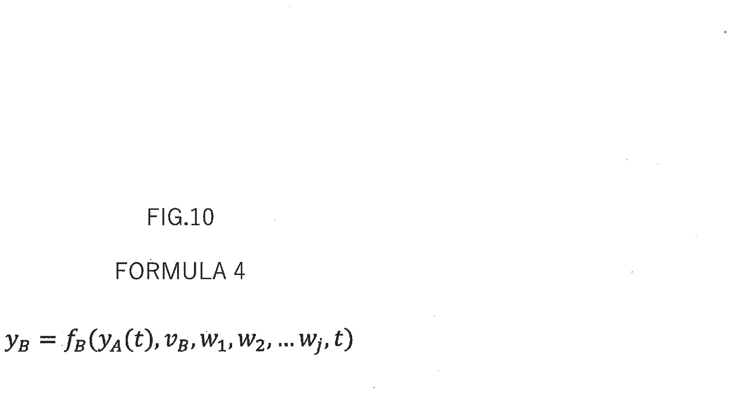

Next, the processing unit 113 executes the deterioration prediction model estimation unit 102 to estimate the deterioration prediction model of the railroad facility B while adding the deterioration information of the railroad facility A (203). Same here, regression estimation of a linear model is used as an example, but the estimation method is not limited to this. The deterioration prediction model for railroad facility B is estimated in the same way, but the deterioration information of railroad facility A is also added to the estimation as the first candidate explanatory variable. The regression equation thus estimated is formula 4 in figure 10.

Here, y_{B} is the deterioration prediction of facility B, y_{A}(t) is the deterioration prediction of facility A at elapsed time t, v_{B} is the maintenance accuracy of facility B, w₁, w₂, ..., wⱼ are the remaining explanatory variables from the candidate explanatory variables (j≤n), t is the elapsed time, and this is the deterioration prediction model for railroad facility B.

Next, using the estimated deterioration prediction models for railroad facility A and railroad facility B, the maintenance costs are predicted when the maintenance accuracy of railroad facility A and railroad facility B is changed. Loop 204 shows the beginning of the loop when changing the maintenance accuracy of railroad facility A. Loop 205 shows the beginning of the loop. when changing the maintenance accuracy of railroad facility B. Loop 206 also shows the beginning of the loop of time variation in the simulation. In this embodiment, the maintenance accuracy of railroad facility A is changed to 1, 2...k, and the maintenance accuracy of railroad facility B is changed to 1, 2...j to obtain the maintenance cost at the set maintenance accuracy.

First, the processing unit 113 performs the deterioration prediction of the railroad facility A (207) . In figure 1, this process corresponds to the deterioration prediction unit 103. When predicting the deterioration of. the railroad facility A, the deterioration prediction model in formula 1 is used, and the values of each explanatory variable at time t are obtained and set from the sensing data and environmental information in the auxiliary memory. The maintenance accuracy is set using the maintenance accuracy set at the beginning of loop 204. When the values of each explanatory variable are set, y_{A} is predicted using formula 1. The result of this prediction is y_{A}(t).

Next, the processing unit 113 performs deterioration prediction of the railroad facility B (208). This process corresponds to the deterioration prediction unit 103 in figure 1. As with the deterioration prediction of railroad facility A, the deterioration prediction model in formula 4 is used, and the values of each explanatory variable at time t are obtained from the sensing data and environmental information in the auxiliary memory, and in addition, y_{A}(t) obtained in 207 is used to set the values. The maintenance accuracy is set using the maintenance accuracy set at the beginning of loop 204 and at the beginning of loop 205. When the values of each explanatory variable have been set, y_{B} is predicted using formula 4. The result of this prediction is y_{B}(t).

Next, processing unit 113 predicts the maintenance cost of railroad facility A (209) . The processing unit 113 executes a program to calculate the maintenance cost. Although there are various possible ways to calculate maintenance costs for railroad facilities, depending on the target facility and maintenance method, here, maintenance costs are described as three, inspection costs, repair costs when an abnormality is found in an inspection, and restoration costs when a failure occurs during transportation operations due to deterioration.

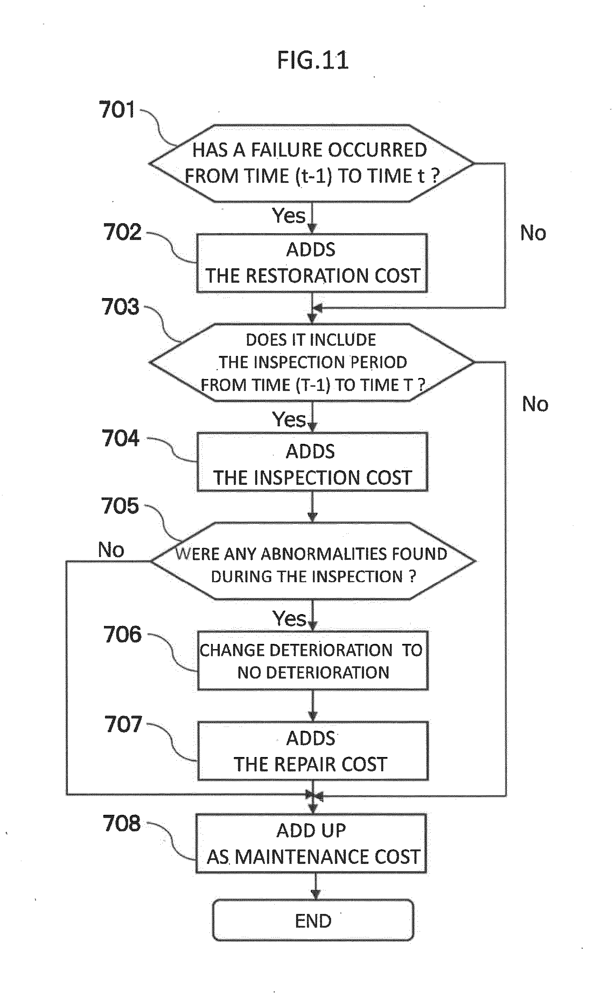

Figure 11 shows an example of how maintenance costs are calculated. First, the processing unit 113 determines whether deterioration led to failure from time (t-1) to time t (701). A possible determine method is, for example, to determine whether the amount of deterioration of the target railroad facility exceeds a preset threshold. If no failure has occurred, the process proceeds to 703. If a failure has occurred, the processing unit 113 adds the restoration cost (702). As calculation of restoration cost, the removal fee for the target facility, the loss of opportunity to use until the target facility is removed, etc. are pointed out, and it is performed addition based on the pre-set value.

Next, processing unit 113 determines whether an inspection period is included between time (t-1) and time t (703). The inspection period indicates when the railroad facilities are inspected, for example, every month, and if there is an inspection period between time (t-1) and time t, it is assumed that the inspection was performed. If no inspection period is included, the process proceeds to 708. If an inspection period is included, processing unit 113 adds the inspection cost (704). The inspection cost is also a pre-set value, and is added according to that value.

Next, the processing unit 113 determines whether any abnormalities were found during the inspection (705). If no abnormality was found, processing proceeds to 708. If an abnormality is found, it is assumed that repairs have been made and the deterioration is changed to no deterioration (706) . For the treatment of no deterioration using the deterioration prediction model, for example, the elapsed time t can be reset to zero to make the condition of no deterioration. Next, processing unit 113 adds the repair cost (707) . The repair cost is also a pre-set value, and is added according to that value. Finally, the restoration cost, inspection cost, and repair cost are added together to form the maintenance cost (708).

Return to the explanation in figure 2. Similarly, processing unit 113 predicts the maintenance cost of railroad facility B (210). The processing unit 113 executes a program to calculate the maintenance cost. The specific processing method is the same as in 209, for example, the maintenance cost calculation method in figure 11 can be used to obtain it.

Next, processing unit 113 determines the end of the time loop (211), and if the maintenance cost has not been calculated until the end time, the time is updated and processing returns to 206. If the end time has been reached, processing proceeds to 212. Thus, the maintenance costs for railroad facility A and railroad facility B are calculated when the maintenance accuracy of railroad facility A is k and the maintenance accuracy of railroad facility B is j (212). The calculation method is to add up, for each railroad facility, the maintenance costs for railroad facility A and the maintenance costs for railroad facility B calculated in 209 and 210 at each time.

Next, processing unit 113 determines the end of the maintenance accuracy change loop for railroad facility B (213), and if it has not reached the end maintenance accuracy, it updates the maintenance accuracy and processing returns to 205. Otherwise, the process proceeds to 214. Next, the maintenance cost of railroad facility A and the maintenance cost of railroad facility B, for each maintenance accuracy (1, 2...j) of railroad facility B at the maintenance accuracy k of railroad facility A, are output (214) . Next, processing unit 113 determines the end of the maintenance accuracy change loop for railroad facility A (215), and if it has not reached the end maintenance accuracy, it updates the maintenance accuracy and the process returns to 204. Otherwise, the process proceeds to 216.

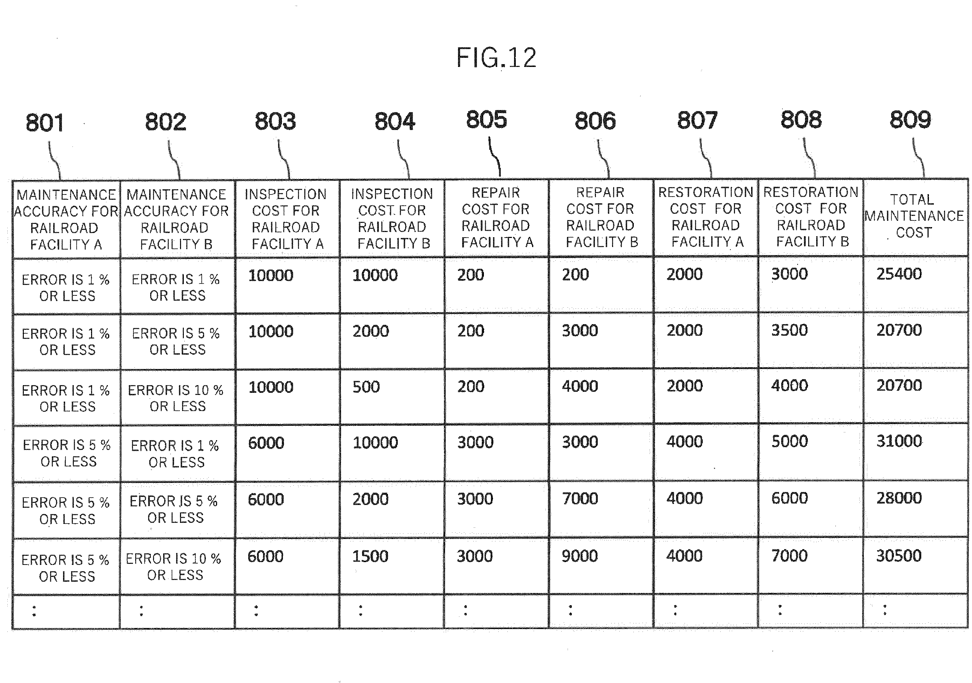

Thus, the maintenance cost of railroad facility A and the maintenance cost of railroad facility B, for each maintenance accuracy of railroad facility A and for each maintenance accuracy of railroad facility B, are output (216) . Figure 12 shows an example of the data structure representing these maintenance costs.

Maintenance accuracy for railroad facility A 801 represents the maintenance accuracy of railroad facility A, and maintenance accuracy for railroad facility B 802 represents the maintenance accuracy of railroad facility B. Although each maintenance accuracy is represented collectively by the error from a reference maintenance accuracy (e.g., the maintenance accuracy set at the beginning of the loop), the maintenance accuracy may be represented by other methods. The inspection cost for railroad facility A 803 represents the inspection cost of railroad facility A at the relevant maintenance accuracy, and the inspection cost for railroad facility B 804 represents the inspection cost of railroad facility B at the relevant maintenance accuracy. The repair cost for railroad facility A 805 represents the repair cost of railroad facility A at the relevant maintenance accuracy, and the repair cost for railroad facility B 806 represents the repair cost of railroad facility B at the relevant maintenance accuracy. The restoration cost for railroad facility A 807 shows the restoration cost of railroad facility A at the relevant maintenance accuracy, and the restoration cost for railroad facility B 808 shows the restoration cost of railroad facility B at the relevant maintenance accuracy. The total maintenance cost 809 represents the total maintenance cost. In this way, it is possible to understand to how much total maintenance cost, for each maintenance accuracy of the railroad facilities. Note that, when multiple maintenance accuracies are included in the error range, a representative maintenance accuracy value may be obtained from these maintenance accuracies, and the values of each cost (803-808) may be obtained based on this maintenance accuracy.

Next, a search is performed for the maintenance accuracy when the total maintenance cost is lowest (217) . The processing unit 113 performs the search, which corresponds to the optimal search unit 104 in figure 1. For the search, if the maintenance cost data structure is as shown in figure 12, the desired combination of maintenance accuracy can be identified by extracting the record with the lowest total maintenance cost 809 and referring to the values of maintenance accuracy for railroad facility A 801 and maintenance accuracy for railroad facility B 802 at that time.

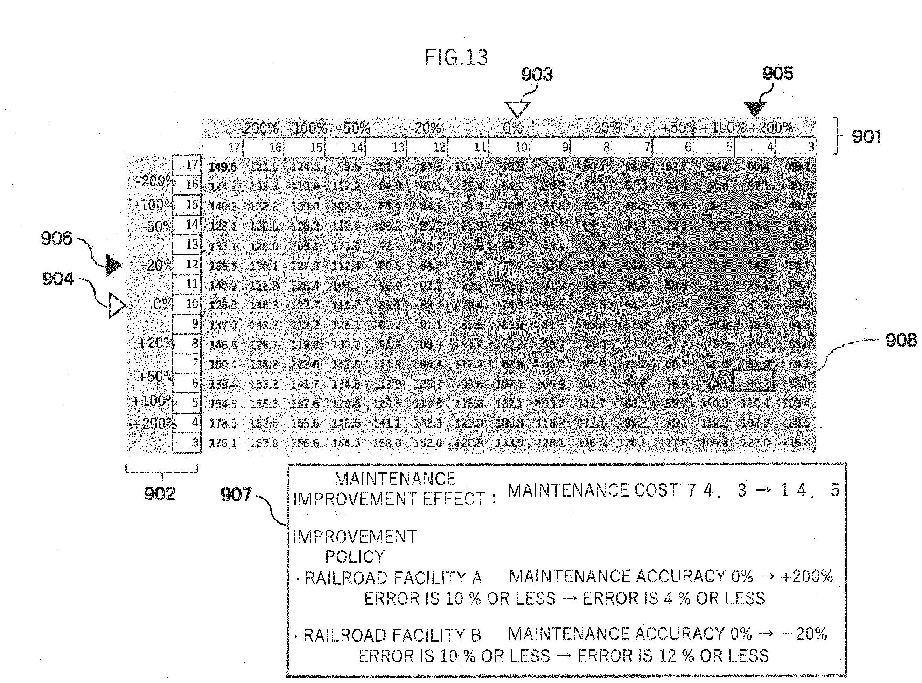

Finally, the processing unit 113 outputs the maintenance accuracy of railroad facility A and B when the total maintenance cost is lowest (218), and the process is completed. In figure 1, this process corresponds to the result creation unit 105. Figure 13 shows an example of output when the total maintenance cost is lowest. The maintenance accuracy output section for railroad facility A 901 shows changes in the maintenance accuracy of railroad facility A. In this example, when the current maintenance accuracy is 10% or less, it shows when the maintenance accuracy is changed from an error of 3% or less to an error of 17% or less. In addition, the change in maintenance accuracy may be expressed on a scale to make it easier to understand what the percentage change is compared to the current state. The scale is the numerical values listed from -200% to +200% in the maintenance accuracy output section for railroad facility A 901. Note that, the scale can be taken in various ways, but the scale can be calculated and output as {current maintenance accuracy} / {maintenance accuracy of proposed changes} × 100% as an example (note that, a negative value means that the maintenance accuracy will worsen, and a positive value means that the maintenance accuracy will improve). The maintenance accuracy output section for railroad facility B 902 shows the change in the maintenance accuracy of railroad facility B. Similar to the maintenance accuracy output section for railroad facility A 901, it shows the value of the maintenance accuracy itself and the percentage change compared to the current status on a scale.

Pointer 903 indicates the maintenance accuracy of the current railroad facility A. Pointer 904 indicates the maintenance accuracy of the current railroad facility B. Pointer 905 indicates the maintenance cost after the change, and in this example, it indicates the maintenance accuracy of the railroad facility A that minimizes the overall maintenance cost. Pointer 906 indicates the maintenance cost after the change, and in this example, it indicates the maintenance cost of railroad facility B, which has the lowest overall maintenance cost. The pointers (903-906) can be in the form of symbols, letters, numbers, etc., as appropriate.

Each square in the table shows the overall maintenance cost for each maintenance accuracy for railroad facility A and B. The lowest cost areas are shown in a darker color and the highest cost areas are shown in a white background color in a heat-map. By presenting the changes in maintenance costs in this way, the display is easy for maintenance managers to understand, and allows them to determine whether other combinations of maintenance accuracy are likely to be effective, thereby encouraging them to change their current maintenance management methods.

The maintenance accuracy change display 907 is an example of a display that specifically shows the maintenance accuracy change that minimizes the overall maintenance cost. In this display example, information on the current maintenance accuracy specified by pointer 903 and pointer 904 and the maintenance accuracy at the maintenance cost that minimizes the overall cost specified by pointer 905 and pointer 906 is displayed. In this display example, the results of the changes are output based on the scale of the percentage change from the current state of maintenance accuracy output section for railroad facility A 901 and the maintenance accuracy output section for railroad facility B 902, and the maintenance cost values.

The example of the maintenance accuracy change display 907 may also be presented for other than the maintenance accuracy that is the minimum maintenance cost. The maintenance accuracy change display 907 may be an indication of the overall maintenance cost change and the result of the maintenance accuracy change. For example, when the maintenance manager clicks on a location that is not the minimum maintenance cost using the selection 908 to select the appropriate maintenance cost, information that the change in maintenance accuracy and maintenance cost from the current state to the location specified by clicking, may be displayed.

Also, the invention is equally applicable to maintenance related to failures as well as to maintenance related to deterioration as described so far. Deterioration is modeled to predict the progress of deterioration for a particular type of railroad facility, but since failures often occur probabilistically, a failure probability distribution function for a particular type of railroad facility is obtained to make predictions. In the following second embodiment, the configuration and differences in the case of maintenance for failures will be explained, and the same contents as those already described will be omitted.

### <Embodiment 2>

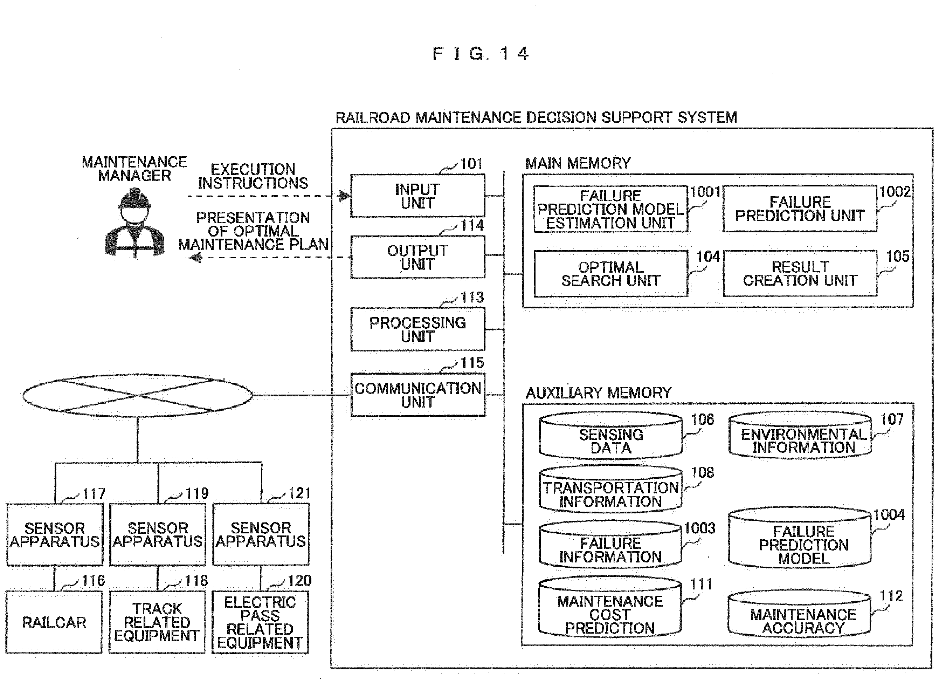

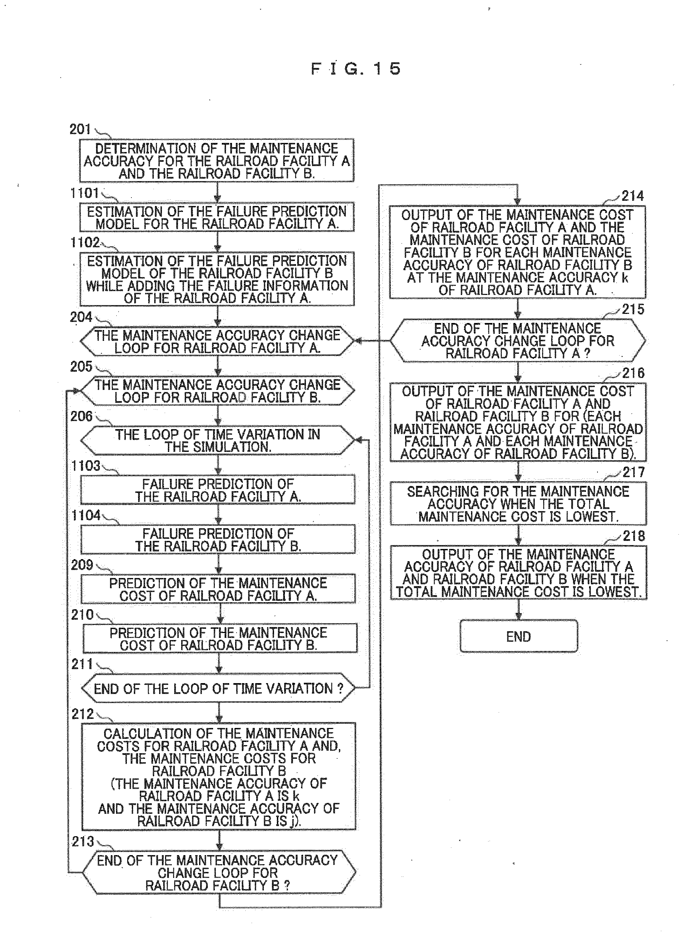

Figure 14 shows an example of a system configuration of a railroad maintenance decision support system in the case of maintenance related to failures. The difference from deterioration includes failure prediction model estimation unit 1001, failure prediction unit 1002, failure information 1003, and failure prediction model 1004. Each difference is explained using figure 15, which shows an example of the processing content.

Figure 15 is a flowchart showing an example of the process of estimating the failure prediction model, estimating the total maintenance cost, and determining the maintenance accuracy of each facility to minimize the maintenance cost, in the case of failure-related maintenance, in the railroad maintenance decision support system. Note that, the same numbers as in figure 2 are assigned to the same processes. In the case of failure-related maintenance, processing unit 113 estimates the failure prediction model of railroad facility A (1101) . In figure 14, this process corresponds to the failure prediction model estimation unit 1001. In the case of failures, they do not change sequentially as in the case of deterioration prediction, but often occur suddenly.

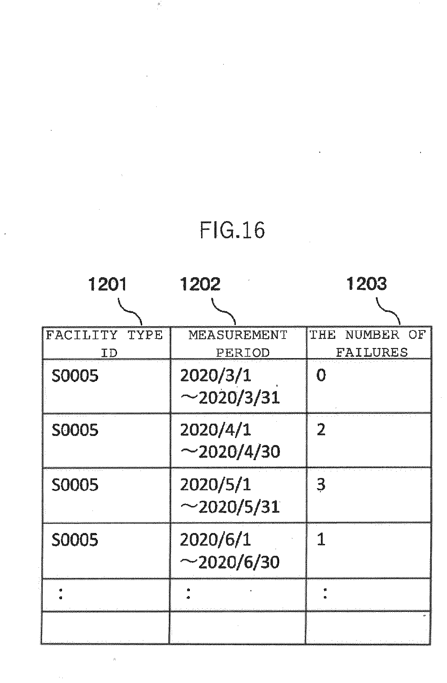

Figure 16 shows a specific example, of failure information 1003 used in obtaining each coefficient of formula 6, which will be explained later. The facility type ID 1201 is the facility type ID and indicates, for example, the unit type of railroad facility A (it is assumed that there are multiple data for the same facility as railroad facility A). The measurement period 1202 indicates the measurement period, and the number of failures 1203 indicates the number of failures for the facility type ID that occurred during the measurement period. In the case of failures, model prediction is performed using data on the number of occurrences for each type of railroad facility, rather than for a specific type of railroad facility, in order to treat the occurrence of an event probabilistically.

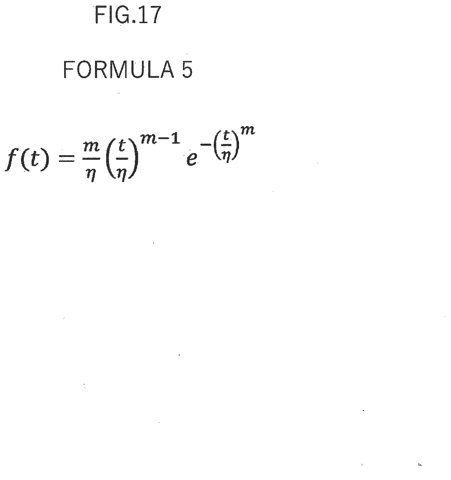

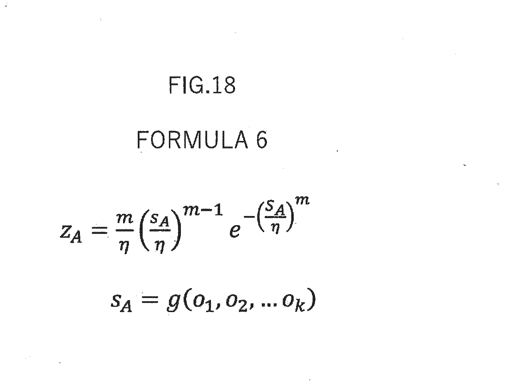

Weibull distribution estimation in reliability engineering is often used as one of the models for probabilistic treatment of the occurrence of events. This embodiment is also explained using failure probability estimation based on the Weibull distribution. Assuming that the failure probability distribution function of a generally available facility is the Weibull distribution, it is given by formula 5 shown in figure 17.
where m is the Weibull coefficient and *η* is the scale. In the case of railroad facilities, during the time no trains are running, there are many cases in which the ground facilities are not operating, and there are also many times when railcar is not running (e.g., during storage in garages, during inspections, etc.) . So, in reality, it is not simply the time t, but is often influenced by the actual operating time, environmental factors, etc. Therefore, for the failure prediction model of railroad facility A, the Weibull distribution is partially modified to be given by formula 6 shown in figure 18.

Here, z_{A} is the failure prediction model for railroad facility A, m is the Weibull coefficient, *η* is the scale, s_{A} is the correction time, and o₁, o₂, ..., oₖ are explanatory variables for s_{A}. For the explanatory variables o₁, o₂, ..., oₖ, candidate explanatory variables are extracted from the sensing data 106 and environmental information 107 in the same way as for deterioration prediction. In addition, transportation information may be taken into account as described above by using information on passage at locations where failures may occur. Various ways of giving the formula g are possible, but for example, s_{A} is obtained once assuming a linear regression formula, and then each coefficient that leads to z_{A} is obtained using the cumulative hazard method or maximum likelihood method adopted in Weibull distribution estimation. For example, based on the measurement period 1202 and number of failures 1203 in the failure information 1003, the measured value z_{A}^(t), t = t₀, t₁, ... tₖ is obtained, and at the same time the predicted value z_{A}(t), t = t₀, t₁, ... tₖ is obtained based on formula 6. And, by the deviation is obtained from the difference, and correcting the formula for s_{A} in a direction that reduces the degree of deviation, formula 6 in fig. 18 can be finally determined.

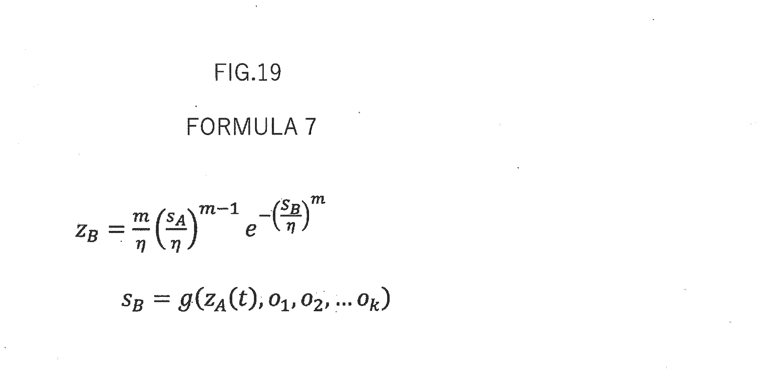

Next, processing unit 113 adds the failure information of railroad facility A to estimate the failure prediction model of railroad facility B (1102). This process corresponds to the failure prediction model estimation unit 1001 in fig. 14. The failure prediction model of railroad facility B at this time is given by formula 7 shown in figure 19.

Where z_{B} is the failure prediction model for railroad facility B, z_{A}(t) is the value of z_{A} at time t, m is the Weibull coefficient, *η* is the scale, s_{B} is the correction time, and o₁, o₂, ... oₖ are the explanatory variables for s_{B}. As in the deterioration prediction model, one of the features of this invention is to include the failure probability of the type of railroad facility A in the explanatory variables for estimation. Regarding in the estimation of the failure prediction model, the same as 1001, z_{B} and s_{B} are estimated.

The next point that differs from deterioration is the failure prediction (1103) of the railroad facility A. Failure prediction is performed by processing unit 113, which corresponds to failure prediction unit 1002 in figure 14. In the case of failure prediction, since a probabilistic formula 6 is given as the failure probability distribution function, in this example, once the failure probability z_{A}(t) at this time t is obtained, a random number between 0 and 1 is separately generated, and if that random number exceeds z_{A}(t), a failure is predicted to have occurred. Similarly, processing unit 113 executes failure prediction unit 1002 to predict the failure of railroad facility B (1104). In this case, as in the failure prediction of railroad facility A, in this example, after obtaining the failure probability z_{B}(t) at this time t based on formula 7, a random number between 0 and 1 is separately generated, and if the random number exceeds z_{B}(t), a failure is predicted to have occurred. After, by the same process as in the deterioration prediction is performed, the maintenance cost that minimizes the overall cost for failures can be obtained.

Next, the third embodiment is explained. The third embodiment describes an example of presenting the time variation of maintenance costs for each railroad facility in an easy-to-understand manner. Note that, the same contents as those already described are omitted.

### <Embodiment 3>

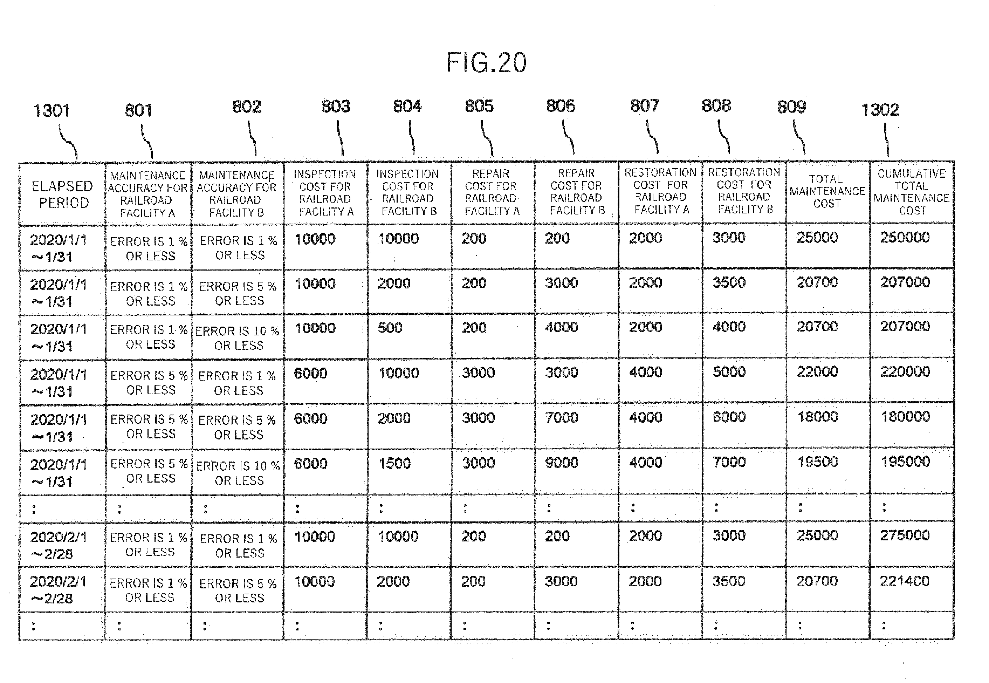

Figure 20 shows an example data structure for another aggregate result in 216 in figure 2. It is basically an extension of figure 12, and the same parts are numbered in figure 12. Only the changes are explained below. The elapsed period 1301 shows the elapsed time, which corresponds to the time variation t in the simulation described 206 of figure 2. The cumulative total maintenance cost 1302 indicates the cumulative total maintenance cost, which is the cumulative total of total maintenance cost 709 up to the elapsed time t. Thus, the data is summarized for each elapsed period 1301.

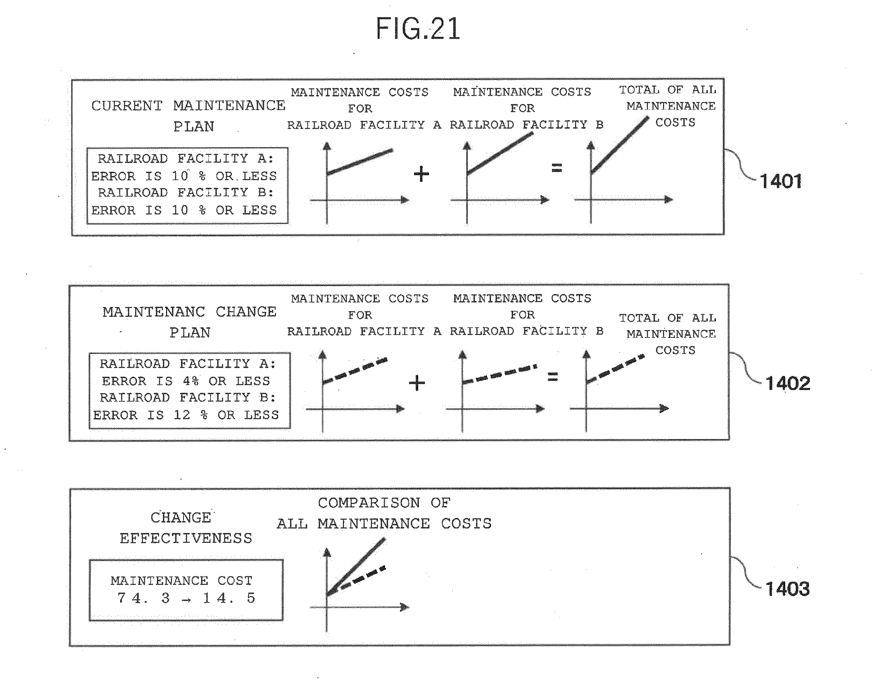

Figure 21 shows an example of a comparative display of maintenance cost using the aggregate results of figure 20. The current maintenance plan 1401 shows the cost change of the current maintenance plan. The leftmost graph is a graph of the change over time of the maintenance cost of railroad facility A. The horizontal axis of the graph shows the elapsed time, and the vertical axis of the graph shows the maintenance cost. The horizontal and vertical axes of all subsequent graphs in figure 21 are the same. With respect to the data, the elapsed period 1301 in figure 20, is used as the value on the horizontal axis, and the total value of the symbols (803, 805, 807) in the records that match the current maintenance accuracy is further accumulated to the elapsed time, is used as the value on the vertical axis. The graph in the center is a graph of the time variation of the maintenance cost of railroad facility B. With respect to the data, in the same way, the elapsed period 1301 in figure 20, is used as the value on the horizontal axis, and the total value of the symbols (804, 806, 808) in the records that match the current maintenance accuracy is further accumulated to the elapsed time, is used as the value on the vertical axis. The rightmost graph shows the total of maintenance cost of railroad facility A and B.

Maintenance change plan 1402 shows the cost change of the maintenance change plan. As with the current maintenance plan 1401, the leftmost graph shows the graph of maintenance cost change over time for railroad facility A, the middle graph shows the graph of maintenance cost change over time for railroad facility B, and the rightmost graph shows the sum of maintenance costs for railroad facility A and railroad facility B. The method of displaying the graphs using the information in figure 20 is the same as for the current maintenance plan 1401.

Change effectiveness 1403 shows a comparison graph of change effectiveness. The total of all maintenance costs created by the current maintenance plan 1401 and the total maintenance costs created by the maintenance change plan 1402 are superimposed and displayed as a process. By presenting the effect of the change in maintenance costs due to the change in maintenance accuracy in this way, it is possible for the maintenance manager to check whether the change is meaningful (e.g., whether it leads to a significant cost reduction).

Also, the invention is equally applicable to both deterioration and failure. When both deterioration and failure are handled, it is also possible to deal with the case where, for example, the damage probability of another railroad facility is changed by the deterioration status of one railroad facility. In the following fourth embodiment, the differences in configuration and processing when handling both deterioration and damage will be explained, and explanations will be omitted for contents similar to those already described.

### <Embodiment 4>

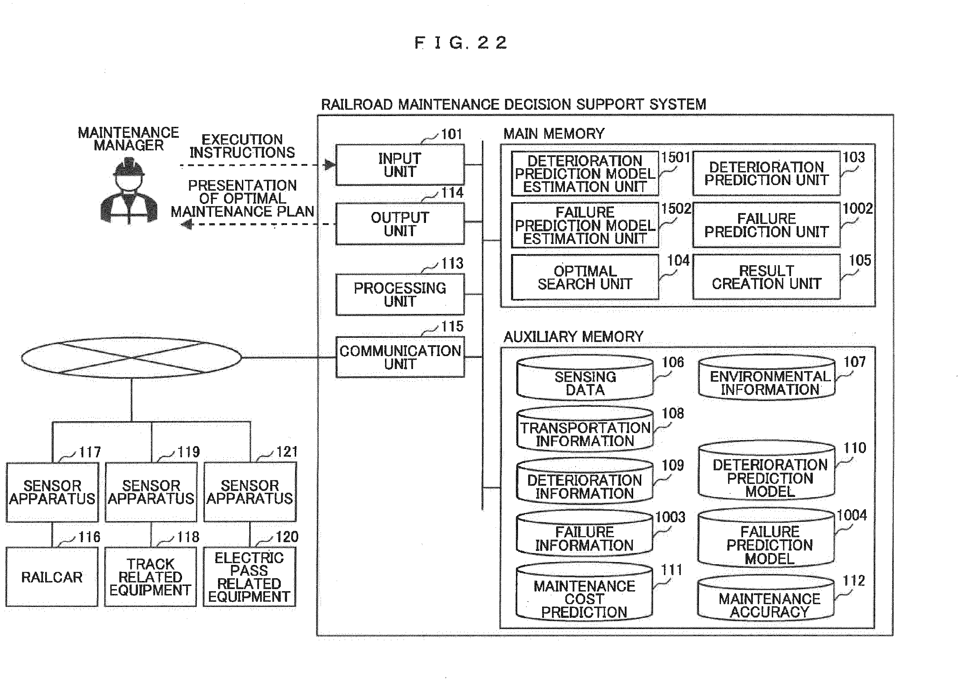

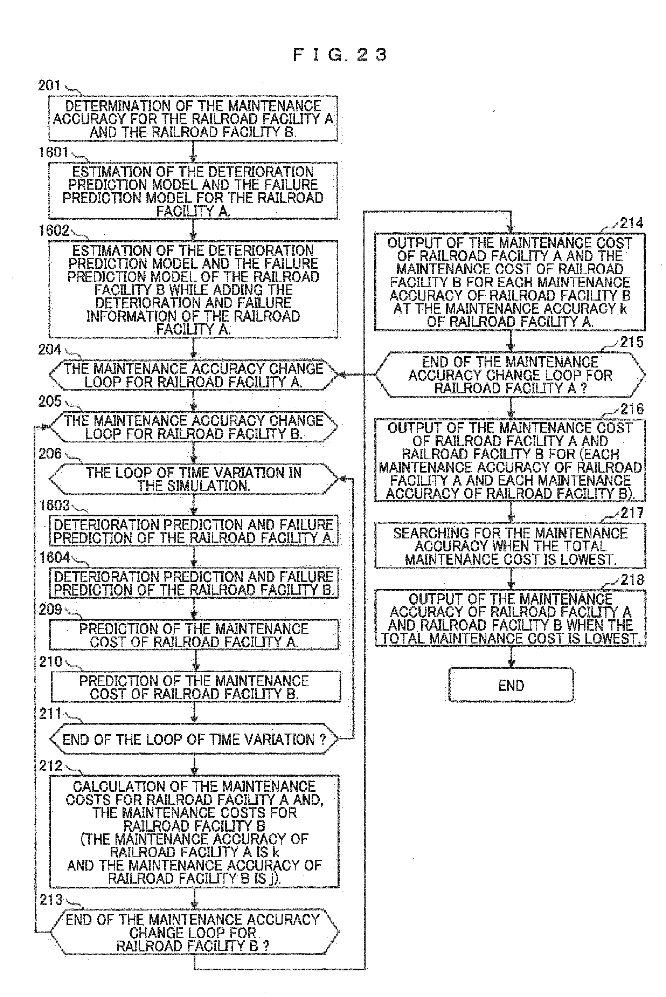

Figure 22 shows an example of the system configuration of a railroad maintenance decision support system when both deterioration and failure are handled. The differences from fig. 1 or fig. 14 are the deterioration prediction model estimation unit 1501 and the failure prediction model estimation unit 1502. Each of these differences is explained using figure 23 of the processing details.

Figure 23 is a flowchart showing an example of a process for estimating deterioration or failure prediction models, estimating total maintenance costs, and determining the maintenance accuracy of each facility to minimize maintenance costs in a railroad maintenance decision support system for maintenance that handles both deterioration and failure. Note that, the same numbers as in figure 2 are used for the same processes.

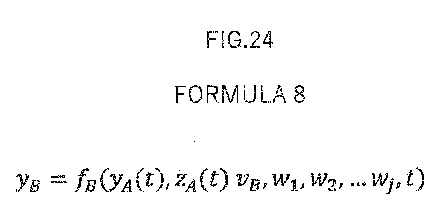

Processing unit 113 estimates the deterioration and failure prediction models for railroad facility A (1601). In figure 22, this process corresponds to the deterioration prediction model estimation unit 1501 and the failure prediction model estimation unit 1502. For the actual model estimation, the same processes as in 202 and 1101 already described are performed, respectively. Next, the deterioration prediction model and failure prediction model for railroad facility B are estimated by processing unit 113 by adding the deterioration and failure information of railroad facility A (1602). In figure 22, this process corresponds to the deterioration prediction model estimation unit 1501 and the failure prediction model estimation unit 1502. At this time, the deterioration prediction model is formula 8 shown in figure 24.

Where y_{B} is the predicted deterioration value of facility B, y_{A}(t) is the predicted deterioration value of facility A at elapsed time t, z_{A}(t) is the predicted failure value of facility A at elapsed time t, va is the maintenance accuracy of facility B, w₁, w₂, ..., wⱼ are the remaining explanatory variables (j ≤n) from the candidate explanatory variables, t is elapsed time, and this is a formula that includes the predicted deterioration and predicted failure values of facility A in the explanatory variables. This is the deterioration prediction model for railroad facility B.

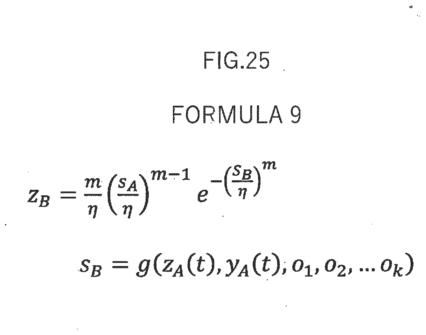

Similarly, for the failure prediction model, formula 9 is shown in figure 25.

Where z_{B} is the failure prediction model for railroad facility B, z_{A}(t) is the value of failure prediction at elapsed time t for facility A, y_{A}(t) is the value of deterioration prediction at elapsed time t for facility A, m is the Weibull coefficient, η is the scale, s_{B} is the correction time, o₁, o₂, ... oₖ are explanatory variables for s_{B}, and the formula includes predicted deterioration and failure values of facility A in the explanatory variables. This is the deterioration and failure prediction model for railroad facility B.

The next change is the prediction of deterioration and failure of railroad facility A by processing unit 113 (1603). Since the deterioration prediction is to determine whether the deterioration has exceeded the standard value and the failure prediction is to determine whether the value, exceeding the failure probability of the failure prediction model has appeared in random trials, when either the deterioration prediction model or the failure prediction model results in an abnormality, it is determined that an abnormality has occurred. Similarly, for the deterioration prediction and failure prediction of railroad facility B, if either of the two models becomes abnormal, it may be determined that there is an abnormality (1604) . Hereafter, by processing in the same manner as the flow in figure 2, maintenance accuracy to reduce the overall maintenance cost can be output when both deterioration and failure are handled.

The invention can also be applied to objects consisting of three or more facilities or equipment. The following fifth embodiment describes the process when dealing with facilities and equipment of three or more railroads. The same contents as those already explained will be omitted.

### <Embodiment 5>

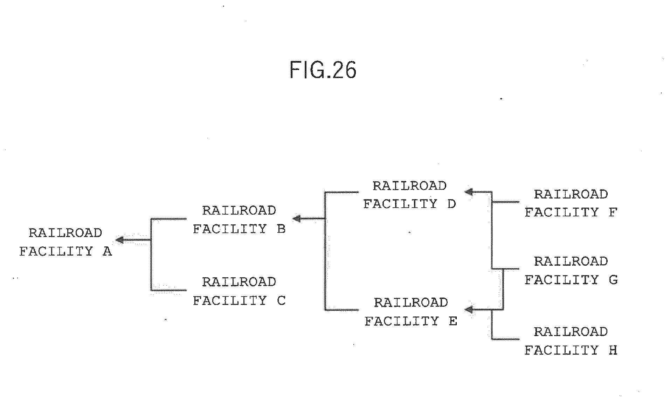

Figure 26 shows a configuration example consisting of multiple facilities and equipment. In this System of Sysmtems railroad example, railroad facility A is shown connected to railroad facility B and railroad facility C. In the same way below, railroad facility B is connected to railroad facility D and railroad facility E. Railroad facility D is connected to railroad facility F and railroad facility G. Railroad facility E is also shown as being connected to railroad facility G and railroad facility H. By this kind of connection relationship, the maintenance relationship of each railroad facility is indicated. In the case of such equipment, model estimation should be performed from downstream facilities while referring to the configuration information.

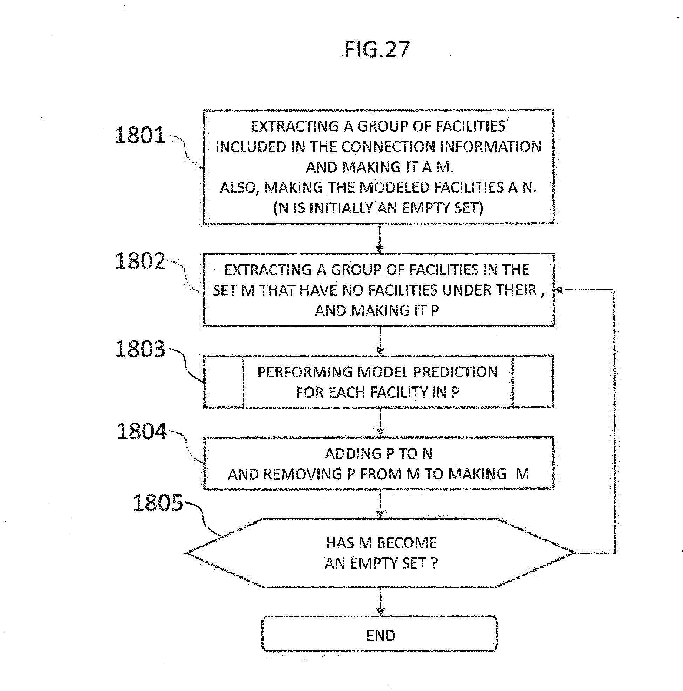

Figure 27 is a flowchart showing an example of model estimation for each railroad facility configured based on the configuration example. First, processing unit 113 extracts a group of facilities included in the configuration information of the facilities and makes it a set M. Also, the modeled facilities are set as N (1801) . However, N is initially an empty set. Here, the configuration information is the information that expresses the configuration example of the railroad facilities shown in figure 26 as data. In other words, the configuration information shows the connection relationship of each railroad facility as a System of Sysmtems, and the configuration information includes information indicating which railroad facility's maintenance accuracy is affected by changes in the maintenance accuracy of a certain railroad facility. The configuration information is, for example, like a connection matrix in graph theory, where each facility is i and the number of railroad facilities is n. It is an n × n two-dimensional matrix, and the element (i, j) indicates whether railroad facility j is connected to railroad facility i (for example, it is given as 1 if it is connected by i → j, it is given as -1 if it is connected by the opposite direction, and it is given as 0 if it is not connected).

Next, the processing unit 113 extracts a group of facilities in the set M that have no facilities under their and makes P (1802). Specifically, the aforementioned configuration information is referenced, and for (i, j) for all j, i for which there is no j that is 1 is an element of P. Next, for each facility i in P, the processing unit 113 performs model prediction (1803) . For this model prediction, the deterioration prediction model estimation unit 102 of fig. 1 or the failure prediction model estimation unit 1001 of fig. 14 are applicable (since all of these detailed processes have already been explained, they will be omitted).

Next, the processing unit 113 adds each element of the model-predicted P to the model-predicted set N and removes P from M to make a new set M (1804). Finally, the processing unit 113 determines whether M is an empty set (1805), and if not, the process returns to 1802. If it is an empty set, the process is end. In this way, model estimation can be performed for all railroad facilities by using the connection information of railroad facilities and performing model estimation starting from the lower-level railroad facilities.

Here, it is preferable that the configuration information is information that makes the facility more susceptible to deterioration and/or failure as it moves downstream (i.e., the lower the railroad facility, the more susceptible to deterioration and/or failure), and the processing unit 113 performs processing using a connection matrix based on this configuration information. This allows the prediction model for other facilities to be generated using the prediction of the facilities that are more likely to deteriorate or failure as explanatory variables, and the results can be output based on the facilities that have a greater relationship in maintenance influence. Note that, the configuration information can be input to the railroad maintenance decision support system by an appropriate method, for example, by the maintenance manager can input it.

Next, the sixth embodiment is described. The sixth embodiment describes an example of how to use in the site of railroad maintenance, rails and wheels as maintenance targets, by using the railroad maintenance decision support system described above.

### <Embodiment 6>

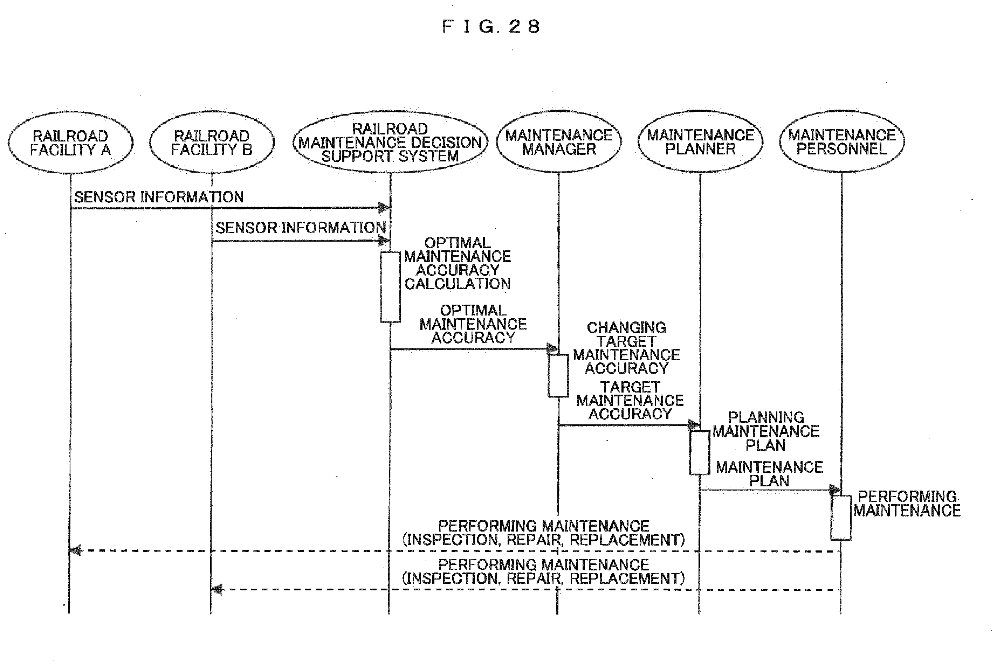

Figure 28 shows an activity diagram at a railroad maintenance site. In this example, sensor information is first sent from railroad facility A and B and stored by the railroad maintenance decision support system. (The railroad maintenance decision support system in this example is the same as the railroad maintenance decision support system shown in figure 1.) For example, sensing information (longitudinal level, alignment, cross level, gauge, twist, etc.) for the rail is input from railroad facility A.

Sensing information (wheel diameter, etc.) relating to wheel wear is input from the railroad facility B. The railroad maintenance decision support system then outputs the maintenance accuracy that minimizes the overall cost based on the above sensing information.

The calculation process is identical to the flow in figure 2. In the case of rails and wheels, the processing unit 113 first estimates a deterioration prediction model for the rails and a deterioration prediction model for the wheels. When for the wheel deterioration prediction model, the deterioration status of the rail is included as an explanatory variable to estimate the wheel deterioration prediction model. Next, processing unit 113 uses the rail and wheel deterioration prediction models to estimate the total maintenance cost when the rail maintenance accuracy and wheel maintenance accuracy are varied. Finally, processing unit 113 outputs the combination of maintenance accuracies that lowers the overall cost the most.

The maintenance manager refers to the results of this calculation (the maintenance accuracy of each facility with the lowest overall cost) and checks the amount of improved maintenance cost and the proposed changes in maintenance accuracy to determine 'whether to change the maintenance accuracy target for each facility. For example, instead of making the rail distortion 1.2 times tighter than the current accuracy, the minimum cost of overall maintenance is indicated as the time when the error of wheel longitude can be allowed up to 1.1 times than the current level, and the maintenance manager decides whether to change to the proposed target maintenance accuracy. If the target maintenance accuracy is changed, the maintenance manager presents the target maintenance accuracy to the maintenance planner. The maintenance planner plans a specific maintenance plan (inspection plan, repair plan, and replacement plan) to ensure that the target maintenance accuracy is maintained. This maintenance plan is presented to each maintenance personnel, and each maintenance personnel inspects, repairs, and replaces rails of wheel according to the maintenance plan.

In this way, for maintenance sites, by clarifying the relationship between the maintenance of railroad facilities and presenting the desired maintenance accuracy for each railroad facility in order to reduce the overall cost of maintenance, changes to better maintenance methods can be made and maintenance costs can be reduced. In turn, the revenue and expenditure of railroad operators will improve.

In other words, by applying the railroad maintenance, decision support system (railroad maintenance support system) to railroads, which are Systems of Systems, and estimating the maintenance accuracy of each facility and equipment that can reduce the overall maintenance cost, it is easy to change the maintenance management criteria for each facility or equipment to reduce the overall maintenance cost. Furthermore, based on changes in maintenance management criteria by maintenance managers, maintenance planners can plan maintenance plans based on the changes in maintenance management criteria, and by maintenance personnel can perform maintenance based on the changed maintenance plans, overall maintenance costs can be minimized.

Although the embodiments of the invention have been described in detail above, the invention is not limited to the aforementioned embodiments, and various design changes can be made within the scope that does not depart from the spirit of the invention described in the claims. For example, the aforementioned embodiments are described in detail for the purpose of explaining the invention in an easy-to-understand manner, and are not necessarily limited to those having all the described configurations. It is also possible to replace some of the configurations of one embodiment with configurations of other embodiments, and it is also possible to add configurations of other embodiments to the configurations of one embodiment. Furthermore, for some of the configurations of each embodiment, it is possible to add, delete, or replace with other configurations.

For example, the railroad maintenance decision support system may be arranged as a computer handled directly by the maintenance manager, or it may be arranged in the cloud. In this case, configuration of such as the input and output units of the railroad maintenance decision support system may be omitted as appropriate, and data input and output by the maintenance manager may be performed using the communication unit. The railroad maintenance decision support system may, for example, be configured with one or more computers, as long as the appropriate processing can be performed. The railroad maintenance decision support system may also be configured in such a way that the functions of the railroad maintenance decision support system are realized by multiple devices performing processing in a distributed manner.

- 113: Processing unit
- 102: Deterioration prediction model estimation unit
- 105: Result creation unit

## Claims

1. A railroad maintenance support system, comprising:
a processor (113), and
a memory unit, wherein
the processor (113) estimates deterioration prediction model (110), for each of multiple railroad facilities, used to predict the deterioration of railroad facility with maintenance accuracy as an explanatory variable, which is information about the accuracy of maintenance of railroad facility converted from sensing data obtained from sensor apparatus (117, 119, 121) of railroad facility, and stores in the memory unit,
in the estimation of the deterioration prediction model (110),
performs the process of estimating a deterioration prediction model (110) of second railroad facility, which includes an explanatory variable is a deterioration prediction of deterioration prediction model (110) of first railroad facility already estimated and stored in the memory unit,
outputs overall maintenance cost by maintenance based on deterioration prediction of deterioration prediction model (110) for each railroad facility.

2. The railroad maintenance support system according to claim 1, wherein
the processor (113) calculates the overall maintenance cost by performing of deterioration prediction with changing maintenance accuracy used to deterioration prediction model (110) for each railroad facility stored in the memory unit,
specifies maintenance accuracy for each railroad facility when the overall maintenance cost is lowest.

3. A railroad maintenance support system, comprising:
a processor (113), and
a memory unit, wherein
the processor (113) estimates failure prediction model (1004), for each of multiple railroad facilities, used to predict the failure of railroad facility, and stores in the memory unit,
in the estimation of the failure prediction model (1004),
performs the process of estimating a failure prediction model (1004) of second railroad facility, which includes an explanatory variable is a failure prediction of failure prediction model (1004) of first railroad facility already estimated and stored in the memory unit,
outputs overall maintenance cost by maintenance based on failure prediction of failure prediction model (1004) for each railroad facility.

4. The railroad maintenance support system according to claim 3, wherein
the processor (113) calculates the overall maintenance cost by performing of failure prediction with changing maintenance accuracy that is information about accuracy of maintenance of railroad facility, be used to failure prediction model (1004) for each railroad facility stored in the memory unit,
specifies maintenance accuracy for each railroad facility when the overall maintenance cost is lowest.

5. The railroad maintenance support system according to claim 2, further comprising:
a display device (114), wherein
the processor (113), regarding the current maintenance accuracy and maintenance accuracy of a proposed change, performs display indicating how much maintenance accuracy will be changed, with used to scale, and
performs display indicating overall maintenance cost change for the proposed change and result of the maintenance accuracy change, on the display device (114).

6. The railroad maintenance support system according to claim 4, further comprising:
a display device (114), wherein
the processor (113), regarding the current maintenance accuracy and maintenance accuracy of a proposed change, performs display indicating how much maintenance accuracy will be changed, with used to scale, and
performs display indicating overall maintenance cost change for the proposed change and result of the maintenance accuracy change, on the display device (114).

7. The railroad maintenance support system according to claim 2, further comprising:
a display device (114), wherein
the processor (113) performs display indicating time variation of maintenance costs for each railroad facility and time variation of overall maintenance cost, in the current maintenance plan (1401), which is a current maintenance plan,
performs display indicating time variation of maintenance costs for each railroad facility and time variation of overall maintenance cost, in the maintenance change plan (1402), which is a proposed change from the current,
performs comparison display a time variation of overall maintenance cost of the current maintenance plan and the maintenance change plan are superimposed, on the display device (114) .

8. The railroad maintenance support system according to claim 4, further comprising:
a display device (114), wherein
the processor (113) performs display indicating time variation of maintenance costs for each railroad facility and time variation of overall maintenance cost, in the current maintenance plan, which is a current maintenance plan (1401),
performs display indicating time variation of maintenance costs for each railroad facility and time variation of overall maintenance cost, in the maintenance change plan (1402), which is a proposed change from the current,
performs comparison display a time variation of overall maintenance cost of the current maintenance plan and the maintenance change plan are superimposed, on the display device (114) .

9. The railroad maintenance support system according to claim 1, wherein
the processor (113) estimates failure prediction model (1004), for each of multiple railroad facilities, used to predict the failure of railroad facility, and stores in the memory unit,
in the estimation of the deterioration prediction model (110),
performs the process of estimating a deterioration prediction model (110) of second railroad facility, adding a failure prediction of failure prediction model (1004) of first railroad facility already estimated and stored in the memory unit to an explanatory variable,
in the estimation of the failure prediction model (1004),
performs the process of estimating a failure prediction model (1004) of second railroad facility, which includes an explanatory variable is a deterioration prediction of deterioration prediction model (110) of first railroad facility already estimated and stored in the memory unit, and a failure prediction of failure prediction model (1004) of first railroad facility already estimated and stored in the memory unit,
instead of outputting a said overall maintenance cost, outputs overall maintenance cost by maintenance based on deterioration prediction of deterioration prediction model (110) for each railroad facility stored in the memory unit, and failure prediction of failure prediction model (1004) for each railroad facility stored in the memory unit.

10. The railroad maintenance support system according to claim 3, wherein
the processor (113) estimates deterioration prediction model (110), for each of multiple railroad facilities, used to predict the deterioration of railroad facility with maintenance accuracy as an explanatory variable, which is information about the accuracy of maintenance of railroad facility converted from sensing data obtained from sensor apparatus (117, 119, 121) of railroad facility, and stores in the memory unit,
in the estimation of the failure prediction model (1004),
performs the process of estimating a failure prediction model (1004) of second railroad facility, adding a deterioration prediction of failure prediction model (110) of first railroad facility already estimated and stored in the memory unit to an explanatory variable,
in the estimation of the deterioration prediction model (110),
performs the process of estimating a deterioration prediction model (110) of second railroad facility, which includes an explanatory variable is a failure prediction of failure prediction model (1004) of first railroad facility already estimated and stored in the memory unit, and a deterioration prediction of deterioration prediction model (110) of first railroad facility already estimated and stored in the memory unit,
instead of outputting a said overall maintenance cost, outputs overall maintenance cost by maintenance based on deterioration prediction of deterioration prediction model (110) for each railroad facility stored in the memory unit, and failure prediction of failure prediction model (1004) for each railroad facility stored in the memory unit.

11. The railroad maintenance support system according to claim 1, wherein
in the estimation of the deterioration prediction model (110), if three or more railroad facilities are related to changes in maintenance accuracy, the processor (113) estimates the deterioration prediction model (110) in order from railroad facility that does not affect the maintenance accuracy of other railroad facility in configuration information indicating connection relationship of each railroad facility.

12. The railroad maintenance support system according to claim 3, wherein
in the estimation of the failure prediction model (1004), if three or more railroad facilities are related to changes in maintenance accuracy regarding maintenance information, which is information about the accuracy of maintenance of railroad facility, the processor (113) estimates the failure prediction model (1004) in order from railroad facility that does not affect the maintenance accuracy of other railroad facility in configuration information indicating connection relationship of each railroad facility.

13. The railroad maintenance support system according to claim 1, wherein
in the estimation of the deterioration prediction model (110), the processor (113) estimates deterioration prediction model (110) based on explanatory variable that take into account transportation information (108) of railroad, by including information on train passage in position where railroad facility is affected by deterioration to explanatory variable, using transportation information (108) of railroad.

14. The railroad maintenance support system according to claim 3, wherein
in the estimation of the failure prediction model (1004), the processor (113) estimates failure prediction model (1004) based on explanatory variable that take into account transportation information (108) of railroad, by including information on train passage in position where railroad facility may be occurred by failure to explanatory variable, using transportation information (108) of railroad.

15. A railroad maintenance support method performed using a railroad maintenance support system including a processor (113), and a memory unit, comprising:
the processor (113) inputs maintenance accuracy which is information about the accuracy of maintenance of railroad facility, estimates deterioration prediction model (110), for each of multiple railroad facilities, used to predict the deterioration of railroad facility with the maintenance accuracy as an explanatory variable, and stores in the memory unit,
outputs overall maintenance cost by maintenance based on deterioration prediction of deterioration prediction model (110) for each railroad facility,
wherein,
when estimating deterioration prediction model (110) for each of the multiple railroad facilities, performs the process of estimating a deterioration prediction model (110) of second railroad facility, which includes an explanatory variable is a deterioration prediction of deterioration prediction model (110) of first railroad facility already estimated and stored in the memory unit.
